# EUROPÄISCHE PATENTSCHRIFT

(11) **EP 3 741 992 B1**
(45) Veröffentlichungstag und Bekanntmachung des Hinweises auf die Patenterteilung: **11.01.2023**
(21) Anmeldenummer: 19175715.2
(22) Anmeldetag: 21.05.2019
(51) Int. Cl.: F03D 13/40, B60P 3/40

(54) **TRANSPORTSYSTEM FÜR EIN WINDENERGIEANLAGENROTORBLATT**
TRANSPORT SYSTEM FOR A WIND ENERGY ASSEMBLY ROTOR BLADE
SYSTÈME DE TRANSPORT POUR UNE PALE DE ROTOR D'ÉOLIENNE

(43) Veröffentlichungstag der Anmeldung: 25.11.2020
(73) Patentinhaber: Nordex Energy SE & Co. KG, 22419 Hamburg (DE)
(72) Erfinder: Rieke, Johannes, 22417 Hamburg (DE)
(74) Vertreter: Epping - Hermann - Fischer

(56) Entgegenhaltungen:
- WO-A1-2006/000230
- WO-A2-2014/072042
- KR-B1- 101 614 493
- US-B1- 9 790 927

## Beschreibung

Die Erfindung betrifft ein Transportsystem für ein Windenergieanlagenrotorblatt. Das Transportsystem weist eine vordere Lagervorrichtung einer Zugmaschine für ein blattwurzelseitiges Ende sowie ein Nachläuferfahrzeug mit einer hinteren Lagervorrichtung für einen blattspitzenseitigen Endbereich des Windenergieanlagenrotorblatts auf. Die Erfindung betrifft auch ein Verfahren zum Transport eines Windenergieanlagenrotorblatts.

Transportsysteme, beispielsweise Transportfahrzeuge wie Schwerlast-Transportfahrzeuge, zum Transport von Windenergieanlagenrotorblättern sind aus dem Stand der Technik bekannt (siehe beispielsweise die EP 2105349 B1). Solche Transportsysteme haben eine angetriebene Zugmaschine, die mit dem Transportgut, dem Windenergieanlagenrotorblatt, über eine Lagervorrichtung fest gekoppelt ist. Zusätzlich ist das Windenergieanlagenrotorblatt in einem hinteren Bereich bezogen auf die Gesamtlänge an einem Nachläuferfahrzeug abgestützt. Nachläuferfahrzeuge haben in der Regel zwei oder mehrere Achsen sowie ein Drehlager, sodass ein Träger- beziehungsweise Haltegestell zum Lagern des Windenergieanlagenrotorblatts um eine Hochachse drehbar ist. Dies ermöglicht Kurvenfahrten für das Transportfahrzeug.

WO 2014/072042 A3 betrifft ein Schwerlast-Transportfahrzeug zum Transport eines länglichen Objekts, mit einer Zugmaschine, einem mehrachsigen Nachläufer, sowie einem auf dem Nachläufer und auf der Zugmaschine abgestützten Träger für das längliche Objekt, wobei der Nachläufer und der Träger in Bezug zueinander um eine Hochachse des Transportfahrzeugs drehbar sind. Erfindungsgemäß ist vorgesehen, dass der Träger über einen Schwanenhals auf der Zugmaschine abgestützt ist, dass der Nachläufer mindestens eine Starrachse und mindestens eine Lenkachse aufweist, und dass sich in einer Lenkbetriebsart während der Fahrt die Lenkachse des Nachläufers in Abhängigkeit von Drehbewegungen des Trägers um die Hochachse in Bezug zum Nachläufer lenken lässt.

US 9,790,927 B1 betrifft den Transport von Windturbinenblättern, insbesondere Systeme und Verfahren für den Transport von länglichen Objekten, umfassend Windturbinenblätter, deren Längen die Verwendung von mehreren miteinander gekoppelten Zugwaggons diktieren, und die Verwendung von speziellen Vorrichtungen, um den Lastausgleich und Lastüberhang bei Zügen zu steuern.

Eine Aufgabe, die der Erfindung zugrunde liegt, ist es, ein Konzept für ein Transportsystem anzugeben, welches den Transport zunehmend länger werdender Windenergieanlagenrotorblätter verbessert.

Gemäß einem Aspekt wird ein Transportsystem für ein Windenergieanlagenrotorblatt offenbart. Das Transportsystem weist ein Windenergieanlagenrotorblatt auf. Das Transportsystem weist weiter eine vordere Lagervorrichtung auf, an welcher ein blattwurzelseitiges Ende des Windenergieanlagenrotorblatts festgelegt ist. Die vordere Lagervorrichtung ist zum Lagern des Windenergieanlagenrotorblatts an einer Zugmaschine eingerichtet. Das Transportsystem weist weiter ein antriebsloses Nachläuferfahrzeug mit einer hinteren Lagervorrichtung auf, an welcher ein hinterer, blattspitzenseitiger Bereich des Windenergieanlagenrotorblatts festgelegt ist. Das Transportsystem weist weiter eine Versteifungsvorrichtung für das Windenergieanlagenrotorblatt auf, welche eine erste Kopplungsvorrichtung, eine zweite Kopplungsvorrichtung und ein Verbindungsmittel aufweist. Die erste Kopplungsvorrichtung ist bezogen auf die Längsachse des Windenergieanlagenrotorblatts in einem vorderen, blattwurzelseitigen Bereich des Windenergieanlagenrotorblatts fest mit dem Windenergieanlagenrotorblatt verbunden. Die zweite Kopplungsvorrichtung ist bezogen auf die Längsachse des Windenergieanlagenrotorblatts in dem hinteren Bereich des Windenergieanlagenrotorblatts fest mit dem Windenergieanlagenrotorblatt verbunden. Die beiden Kopplungsvorrichtungen sind mittels des Verbindungsmittels miteinander derart verbunden, dass das Verbindungsmittel auf Zug belastet ist. Dadurch bildet die Versteifungsvorrichtung zusammen mit dem Windenergieanlagenrotorblatt eine Versteifungsstruktur und einer Durchbiegung des Windenergieanlagenrotorblatts zwischen den beiden Kopplungsvorrichtungen wird entgegengewirkt.

Erfindungsgemäß ist eine Versteifungsvorrichtung vorgesehen, die zusammen mit dem Rotorblatt selbst eine steife Struktur ausbildet. Dies bedeutet, dass das Rotorblatt zumindest in dem Abschnitt zwischen den beiden Kopplungsvorrichtungen Teil einer sich selbsttragenden oder freitragenden Versteifung ist. Mit anderen Worten ist das Rotorblatt in dem Abschnitt zwischen den beiden Kopplungsabschnitten Teil eines Tragwerks. Die Versteifung wirkt nur, wenn das Rotorblatt entsprechend fest mit den Kopplungsvorrichtungen verbunden ist und selbst Kräfte zur Versteifung überträgt. Insbesondere wird das Rotorblatt bei entsprechender Anordnung auf Zug und/oder Druck belastet, während das Verbindungsmittel auf Zug belastet wird. Das Rotorblatt liegt folglich nicht lediglich auf einem Träger auf, beispielsweise einem Träger, der sich von der vorderen bis zu hinteren Lagervorrichtung erstreckt.

Auf diese Art und Weise wird der Transport von besonders langen Rotorblättern auf der Straße mit einem Nachläuferfahrzeug, welches auch als Dolly oder Dolly-Nachläufer bezeichnet werden kann, ermöglicht. Im Allgemeinen ist in der Windenergiebranche ein Trend zu längeren Rotorblättern erkennbar, für welche das vorliegende Transportsystem besonders geeignet ist. Ohne die Versteifungsvorrichtung würden derart lange Rotorblätter, beispielsweise mit mehr als 70 Metern, beim Transport mit einem eingangs erwähnten Transportfahrzeug eine große Durchbiegung erfahren, da zwischen der vorderen Lagervorrichtung beziehungsweise der Zugmaschine und dem Nachläufer nur Stahlseile und das Rotorblatt selbst eine Verbindung darstellen, wobei hier die Stahlseile nur der Sicherung des Nachläufers an der Zugmaschine bzw. zur Aufnahme von Kabeln und Hydraulikleitungen dienen und selbst keine Versteifung im oben beschriebenen Sinn darstellen.

Mittels der Versteifungsvorrichtung kann die Durchbiegung bei derart langen Rotorblättern auf ein strukturell sinnvolles Maß reduziert werden, ohne dass die Notwendigkeit besteht, derartig lange Windenergieanlagenrotorblätter extra für den Transport selbst steifer und damit teurer und schwerer auszulegen. Erfindungsgemäß wird das Rotorblatt folglich über die zumindest teilweise externe Struktur versteift, so dass eine geringe Durchbiegung und Beanspruchung des Blattes erfolgt, sowie eine Mindestbodenfreiheit gewährleistet ist. Selbstverständlich lassen sich mit dem Transportsystem auch kürzere Rotorblätter transportieren.

Um die gewünschten Effekte zu erzielen, muss das Rotorblatt beim Befestigen und Lagern entsprechend zwischen den beiden Kopplungsvorrichtungen angeordnet sein. Die beiden Kopplungsvorrichtungen müssen fest, das heißt im Wesentlichen steif, mit dem Windenergieanlagenrotorblatt verbunden sein. Die Kopplungsvorrichtungen können auch als Befestigungsvorrichtungen bezeichnet werden. Die beiden Kopplungsvorrichtungen werden mittels des Verbindungsmittels so verspannt, dass eine weitergehende Durchbiegung des Rotorblattes durch das entsprechend gespannte Verbindungsmittel blockiert ist. Das auf Zug belastete Verbindungsmittel wirkt derart, dass die beiden Kopplungsvorrichtungen entgegen einer durch das Rotorblatt erzeugten Durchbiegekraft zusammengezogen beziehungsweise zusammengehalten werden. Je nach Ausgestaltung der Kopplungsvorrichtungen ist alternativ auch denkbar, dass die beiden Kopplungsvorrichtungen auch zuerst miteinander lose, das heißt ohne Zugbelastung, verbunden werden. Anschließend wird das Rotorblatt - optional unter Aufbringung einer entsprechenden Vorbiegung - mit den Kopplungsvorrichtungen verbunden, so dass das Verbindungsmittel auf Zug belastet wird und eine Versteifung erreicht wird.

Die vordere Lagervorrichtung ist beispielsweise Teil einer Zugmaschine oder wird mit dieser fest verbunden. Bei der Zugmaschine handelt es sich beispielsweise um einen Schwerlasttransport-LKW. Eine Ausführungsform des Transportsystems mit Zugmaschine wird als Transportfahrzeug bezeichnet.

Die Festlegung des Rotorblatts in einem hinteren, blattspitzenseitigen Bereich an der hinteren Lagervorrichtung bedeutet, dass das Rotorblatt zumindest teilweise über das Nachläuferfahrzeug beziehungsweise die hintere Lagervorrichtung hinausragen kann. Ein Überhang ist typischerweise notwendig aufgrund der dünneren Ausgestaltung des Rotorblatts im blattspitzenseitigen (End-)Bereich sowie der insgesamt sehr hohen Gesamtlänge eines Rotorblatts.

Als Nachläuferfahrzeug wird insbesondere im Transportwesen wie dem Langmaterialtransport ein Fahrzeuganhänger verstanden, der nur oder hauptsächlich durch das Transportgut, also durch die Ladung, mit dem Zugfahrzeug verbunden ist und über keinen Eigenantrieb verfügt. Ein solches Nachläuferfahrzeug wird von einer Zugmaschine mittelbar über das Transportgut gezogen. Mit anderen Worten handelt es sich bei dem Nachläuferfahrzeug um ein Mitrollfahrzeug.

Gemäß einer Ausführungsform ist das Windenergieanlagenrotorblatt derart zwischen den beiden Kopplungsvorrichtungen angeordnet (gelagert), dass eine Nulllinie des Verbundes aus Windenergieanlagenrotorblatt und Kopplungsvorrichtung zumindest abschnittsweise eine Krümmung entgegen der Schwerkraftrichtung aufweist. Unter der Nulllinie soll im vorliegenden Kontext diejenige Linie entlang der Längsrichtung beziehungsweise Längsachse des Rotorblatts bzw. des Verbundes aus Rotorblatt und Versteifungsvorrichtung verstanden werden, an der sich Druck- und Zugkräfte gegenseitig aufheben. Die Nulllinie kann auch als neutrale Faser oder elastische Achse bezeichnet werden. Die Nulllinie muss nicht zwingend durch ein Material des Rotorblatts verlaufen, sondern kann auch durch einen Hohlraum oder außerhalb der Rotorblatthülle verlaufen. Bei der Nulllinie handelt es sich um eine gedachte Linie. Durch eine derartige Anordnung ist sichergestellt, dass eine Durchbiegung des Windenenergieanlagenrotorblatts durch das auf Zug belastete Verbindungsmittel kompensiert wird.

Gemäß einer Ausführungsform ist die erste Kopplungsvorrichtung Teil der vorderen Lagervorrichtung. Beispielsweise handelt es sich um eine Aufnahmevorrichtung zum Verbinden mit dem Verbindungsmittel, wie etwa eine Öse, ein Haken oder dergleichen. Dadurch ist die Kopplungsvorrichtung steif und fest mit der vorderen Lagervorrichtung und damit mittelbar mit dem Rotorblatt fest verbunden.

Analog ist gemäß einer Ausführungsform die zweite Kopplungsvorrichtung Teil der hinteren Lagervorrichtung. Bei der hinteren Lagervorrichtung kann es sich um ein vertikales Gestell, ein sogenanntes Tip-Gestell oder Blattspitzen-Gestell, handeln. Diese hintere Lagervorrichtung ist an dem Nachläuferfahrzeug festgelegt. Alternativ ist die zweite Kopplungsvorrichtung an dem Nachläuferfahrzeug selbst ausgebildet, beispielsweise an einem Gestelltisch, an welchem die zweite Lagervorrichtung festgelegt ist. Wiederum kann es sich um eine Aufnahmevorrichtung zum Koppeln mit dem Verbindungsmittel handeln. Analog zu oben ist damit eine mittelbare, feste und steife Verbindung der zweiten Kopplungsvorrichtung mit dem Windenergieanlagenrotorblatt gegeben.

Die oben genannten Ausführungsformen haben zur Folge, dass keine weiteren Bauelemente oder Haltegestelle von Nöten sind, um die Versteifungsvorrichtung zu bilden. Dies spart Kosten ein.

Gemäß einer Ausführungsform ist die erste Kopplungsvorrichtung derart ausgebildet, dass ein Koppelpunkt, in welchem das Verbindungsmittel mit der ersten Kopplungsvorrichtung verbunden ist, bezüglich einer vertikalen Richtung von einer Nulllinie des Windenergieanlagenrotorblatts beabstandet ist. Bezüglich der Nulllinie gilt das oben Gesagte. Vertikale Richtung bedeutet eine Richtung entlang der Schwerkraftrichtung. Je größer der Abstand des Koppelpunktes von der Nulllinie ist, desto effektiver lässt sich die versteifte Einheit bilden. Unter dem Koppelpunkt wird derjenige Punkt, Abschnitt oder Bereich verstanden, in welchem die mechanische Verbindung mit dem Verbindungsmittel hergestellt wird. Bevorzugt befindet sich der Koppelpunkt unterhalb des montierten Rotorblattes. Beispielsweise liegt der Koppelpunkt unterhalb der Nulllinie etwa auf Höhe des Wurzelendes des Rotorblattes, bezogen auf die vertikale Richtung. Dadurch wird erreicht, dass das Verbindungsmittel beabstandet zu der Nulllinie verläuft.

Gemäß einer Ausführungsform ist die zweite Kopplungsvorrichtung analog derart ausgebildet, dass ein Koppelpunkt, in welchem das Verbindungsmittel mit der zweiten Kopplungsvorrichtung verbunden ist, bezüglich einer vertikalen Richtung von einer Nulllinie des Windenergieanlagenrotorblatts beabstandet ist. Es gilt das oben Gesagte analog. Dadurch wird erreicht, dass das Verbindungsmittel beabstandet zu der Nulllinie beziehungsweise des Rotorblatts verläuft.

Es sei an dieser Stelle angemerkt, dass in bevorzugter Ausführungsform die beiden Koppelpunkte auf einer gemeinsamen Seite bezüglich der Nulllinie angeordnet sind. Mit Blick auf die Schwerkraftrichtung sind die beiden Koppelpunkte demnach entweder oberhalb der Nulllinie oder unterhalb der Nulllinie angeordnet.

Durch die Beabstandung beider Koppelpunkte wird eine Art Doppel-T-Trägerkonstruktion möglich, bei welchem das Rotorblatt selbst eine Art Obergurt darstellt, der auf Zug und Druck belastet werden kann. Der korrespondierende Untergurt wird durch das Verbindungsmittel gebildet, welches nur auf Zug belastet ist. Mit anderen Worten wird erreicht, dass das Verbindungsmittel im Wesentlichen parallel zu dem Rotorblatt unterhalb oder oberhalb der Nulllinie verläuft.

Gemäß einer Ausführungsform ist die erste Kopplungsvorrichtung als ein Haltegestell ausgebildet, welches bezogen auf die Längsachse des Windenergieanlagenrotorblatts zwischen der vorderen Lagervorrichtung und einer Mitte des Windenergieanlagenrotorblatts angeordnet ist. Demnach handelt es sich bei der ersten Kopplungsvorrichtung um ein externes, separates Haltegestell, was an dem Windenergieanlagenrotorblatt festgelegt wird. Eine Lage bezüglich der Längsachse kann beispielsweise frei gewählt werden. Dadurch kann genau derjenige Bereich des Rotorblatts gezielt ausgewählt werden, der mittels der Versteifungsvorrichtung im Zusammenspiel mit dem Rotorblatt selbst versteift werden soll. Mittels des Haltegestells wird somit ein flexibles Einstellen der Versteifung ermöglicht.

Gemäß einer Ausführungsform ist die zweite Kopplungsvorrichtung als ein Haltegestell ausgebildet, welches bezogen auf die Längsachse des Windenergieanlagenrotorblatts zwischen der hinteren Lagervorrichtung und einer Mitte des Windenergieanlagenrotorblatts angeordnet ist. Es gilt das oben Gesagte analog.

Die als Haltegestelle ausgebildeten Kopplungsvorrichtungen sind so ausgebildet, dass diese auf der Zugmaschine oder insbesondere dem Nachläuferfahrzeug sicher ablegbar und transportierbar sind. Beispielsweise können sie horizontal auf dem Nachläuferfahrzeug abgelegt und gestapelt werden. Dadurch können die Haltegestelle bei einer Leerfahrt oder allgemein bei Nichtgebrauch sicher transportiert werden und es werden keine weiteren Transportmittel für die Haltegestelle und Versteifungselemente benötigt.

Gemäß einer Ausführungsform sind die erste und/oder die zweite Kopplungsvorrichtung über einen oder mehrere Balken mit der vorderen beziehungsweise hinteren Lagervorrichtung fest verbunden. Die Balken verlaufen entlang der Längsachse des Windenergieanlagenrotorblatts. Beispielsweise handelt es sich um horizontale Balken. Die Balken können auch als Träger oder Balkenträger bezeichnet werden. Dies trägt dazu bei, dass die Kopplungsvorrichtungen beziehungsweise Haltegestelle an den Lagervorrichtungen abgestützt sind. Dies unterstützt die oben genannten Vorteile und Funktionen.

Gemäß einer Ausführungsform ist das Verbindungsmittel durch mehrere, untereinander gelenkig verbundene Verbindungsbalken gebildet. Beispielsweise handelt es sich um im Wesentlichen horizontal verlaufende Balken beziehungsweise Trägerbalken. Mit anderen Worten sind die Verbindungsbalken in Reihe verbunden. Durch ein derartiges Verbindungsmittel ist eine einfache Montage ermöglicht. Des Weiteren können derartige Balken, bei denen es sich beispielsweise um Balkenträger aus metallischen Werkstoffen oder leichten aus Verbundwerkstoffen handelt, besonders hohe Zugkräfte aufnehmen. In diesem Fall ist bevorzugt vorgesehen, dass nach Verbinden der Kopplungsvorrichtungen das Rotorblatt mit letzteren fest verbunden wird, so dass das Verbindungsmittel auf Zug belastet ist.

Gemäß einer weiteren Ausführungsform sind zwischen der ersten Kopplungsvorrichtung und der zweiten Kopplungsvorrichtung mehrere Haltegestelle angeordnet, die jeweils fest mit dem Windenergieanlagenrotorblatt verbunden sind. Die Haltegestelle sind mit den Verbindungsbalken und weiteren Balken, insbesondere gelenkig, verbunden. Mit anderen Worten sind die Haltegestelle, die auch als vertikale Gestelle bezeichnet werden können, über horizontale und vertikale beziehungsweise diagonale Balkenträger miteinander verbunden. Statt der diagonalen Balkenträger können auch rein zugbelastete Seile oder Stäbe (Zugseile oder Zugstäbe) vorgesehen werden, beispielsweise in umgekehrter oder gespiegelter Ausrichtung. Dadurch wird eine Art Fachwerks- oder Kranausleger-Konstruktion ermöglicht, die eine besonders effektive Aussteifung des Windenergieanlagenrotorblatts für den Transport bewirkt. Mit anderen Worten sind die Haltegestelle fachwerkartig oder kranauslegerartig mittels Verbindungsbalken oder rein zugbelasteten Seilen bzw. Stäben und weiterer Balken verbunden.

In Ausführungsformen sind die Haltegestelle lösbar am Windenergieanlagenrotorblatt verbunden beziehungsweise lösbar untereinander über die Verbindungsbalken und weiteren Balken verbunden, so dass die Haltegestelle einzeln transportiert werden können. Demnach sind die Haltegestelle so ausgebildet, dass die Haltegestelle bei Nichtgebrauch auf der Zugmaschine beziehungsweise insbesondere auf dem Nachläuferfahrzeug sicher abgelegt und/oder gestapelt werden können. Insbesondere können die vertikalen Gestelle horizontal abgelegt und gestapelt werden. Sämtliche Balken können in den Gestellen selbst verstaut werden.

Gemäß einer Ausführungsform ist eine vertikale Höhe zumindest eines oder mehrerer Haltegestelle kleiner als oder gleich eines Durchmessers des Rotorblatts am blattwurzelseitigen Ende.

Gemäß einer Ausführungsform weist jedes Haltegestell ein oder mehrere Aufnahmeschalen zum Aufnehmen des Windenergieanlagenrotorblatts auf, welche an eine äußere Kontur des Windenergieanlagenrotorblatts angepasst sind. Dadurch können die Haltegestelle sicher und fest an dem Rotorblatt festgelegt werden.

Gemäß einer Ausführungsform ist das Verbindungsmittel durch ein oder mehrere Seile, insbesondere Stahlseile, gebildet. Die Vorspannung ist beispielsweise so gewählt, dass im Fall der negativen Gravitationsbelastung durch das Windenergieanlagenrotorblatt noch eine Zugspannung im Seil vorhanden ist.

Gemäß einem weiteren Aspekt wird ein Transportsystem für ein Windenergieanlagenrotorblatt offenbart. Das Transportsystem weist eine vordere Lagervorrichtung auf, an welcher ein blattwurzelseitiges Ende des Windenergieanlagenrotorblatts festlegbar ist, wobei die vordere Lagervorrichtung zum Lagern des Windenergieanlagenrotorblatts an einer Zugmaschine eingerichtet ist. Das Transportsystem weist ein antriebsloses Nachläuferfahrzeug mit einer hinteren Lagervorrichtung auf, an welcher ein hinterer, blattspitzenseitiger Bereich des Windenergieanlagenrotorblatts festlegbar ist. Weiterhin ist eine Versteifungsvorrichtung für das Windenergieanlagenrotorblatt vorgesehen, die eine erste Kopplungsvorrichtung, eine zweite Kopplungsvorrichtung und ein Verbindungsmittel aufweist. Die erste Kopplungsvorrichtung ist eingerichtet, bezogen auf eine Längsachse des Windenergieanlagenrotorblatts in einem vorderen, blattwurzelseitigen Bereich des Windenergieanlagenrotorblatts fest mit dem Windenergieanlagenrotorblatt verbunden zu werden. Die zweite Kopplungsvorrichtung ist eingerichtet, bezogen auf die Längsachse des Windenergieanlagenrotorblatts in dem hinteren Bereich des Windenergieanlagenrotorblatts fest mit dem Windenergieanlagenrotorblatt verbunden zu werden. Die beiden Kopplungsvorrichtungen sind mittels des Verbindungsmittels miteinander derart verbindbar, dass bei bestimmungsgemäßer Festlegung der Kopplungsvorrichtungen an dem Windenergieanlagenrotorblatt das Verbindungsmittel auf Zug belastet ist. Dadurch bildet die Versteifungsvorrichtung zusammen mit dem Windenergieanlagenrotorblatt eine Versteifungsstruktur und einer Durchbiegung des Windenergieanlagenrotorblatts zwischen den beiden Kopplungsvorrichtungen wird entgegengewirkt.

Es werden im Wesentlichen die vorgenannten Vorteile und Funktionen ermöglicht. Die in Bezug auf den ersten Aspekt beschriebenen Ausführungsformen gelten analog.

Gemäß einem weiteren Aspekt wird ein Verfahren zum Transport eines Windenergieanlagenrotorblatts offenbart. Das Verfahren weist die folgenden Schritte auf:
- Festlegen eines blattwurzelseitigen Endes eines Windenergieanlagenrotorblatts an einer vorderen Lagervorrichtung, die ausgebildet ist, das Windenergieanlagenrotorblatt an einer Zugmaschine zu lagern,
- Festlegen eines hinteren, blattspitzenseitigen Bereichs des Windenergieanlagenrotorblatts an einer hinteren Lagervorrichtung eines antriebslosen Nachläuferfahrzeugs,
- Vorsehen einer Versteifungsvorrichtung für das Windenergieanlagenrotorblatt, die eine erste Kopplungsvorrichtung, eine zweite Kopplungsvorrichtung und ein Verbindungsmittel aufweist, wobei
   die erste Kopplungsvorrichtung bezogen auf eine Längsachse des Windenergieanlagenrotorblatts in einem vorderen, blattwurzelseitigen Bereich des Windenergieanlagenrotorblatts fest mit dem Windenergieanlagenrotorblatt verbunden ist, und
   die zweite Kopplungsvorrichtung bezogen auf die Längsachse des Windenergieanlagenrotorblatts in dem hinteren Bereich des Windenergieanlagenrotorblatts fest mit dem Windenergieanlagenrotorblatt verbunden ist,
- Verbinden der beiden Kopplungsvorrichtungen mittels des Verbindungsmittels miteinander derart, dass das Verbindungsmittel auf Zug belastet ist, und dadurch Bilden einer Versteifungsstruktur durch die Versteifungsvorrichtung zusammen mit dem Windenergieanlagenrotorblatt, so dass einer Durchbiegung des Windenergieanlagenrotorblatts zwischen den beiden Kopplungsvorrichtungen entgegengewirkt wird.

Weitere Vorteile, Merkmale und Weiterbildungen ergeben sich aus der nachfolgenden, in Verbindung mit den Figuren erläuterten Beschreibung von Ausführungsbeispielen. Gleiche, gleichartige oder gleich wirkende Elemente können in den Figuren mit den gleichen Bezugszeichen versehen sein.

In den Figuren zeigen:
Figur 1 eine schematische Darstellung einer Windenergieanlage,
Figur 2 eine schematische Darstellung eines Rotorblatts der Windenergieanlage, und
Figur 3 eine schematische Ansicht eines Transportsystems gemäß einem Ausführungsbeispiel der Erfindung,
Figur 4 eine schematische Ansicht eines Transportsystems gemäß einem weiteren Ausführungsbeispiel der Erfindung,
Figur 5 eine schematische Ansicht eines Haltegestells des Transportsystems gemäß einem Ausführungsbeispiel der Erfindung,
Figuren 6 und 7 schematische Ansichten von Transportsystemen gemäß weiterer Ausführungsbeispiele der Erfindung, und
Figur 8 ein schematisches Ablaufdiagramm eines Verfahrens zum Transport eines Windenergieanlagenrotorblatts gemäß einem Ausführungsbeispiel der Erfindung.

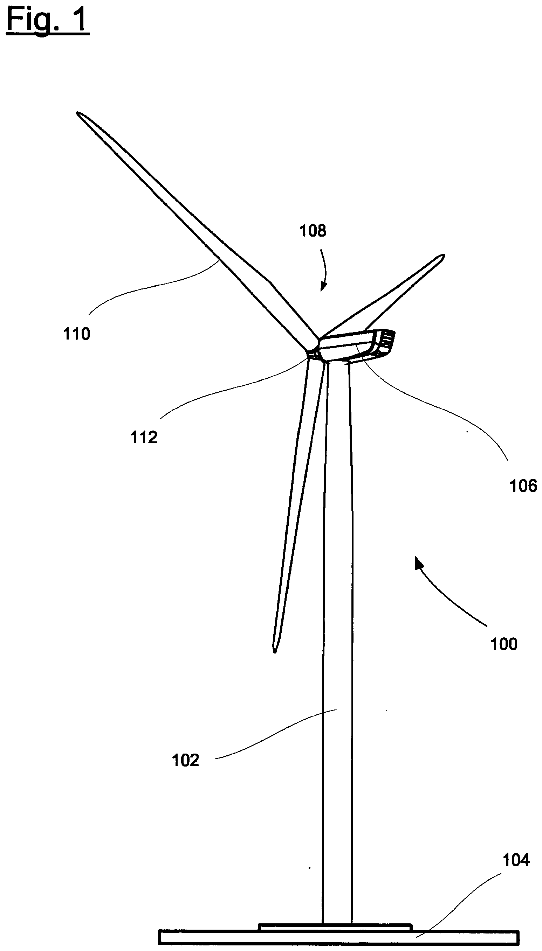

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

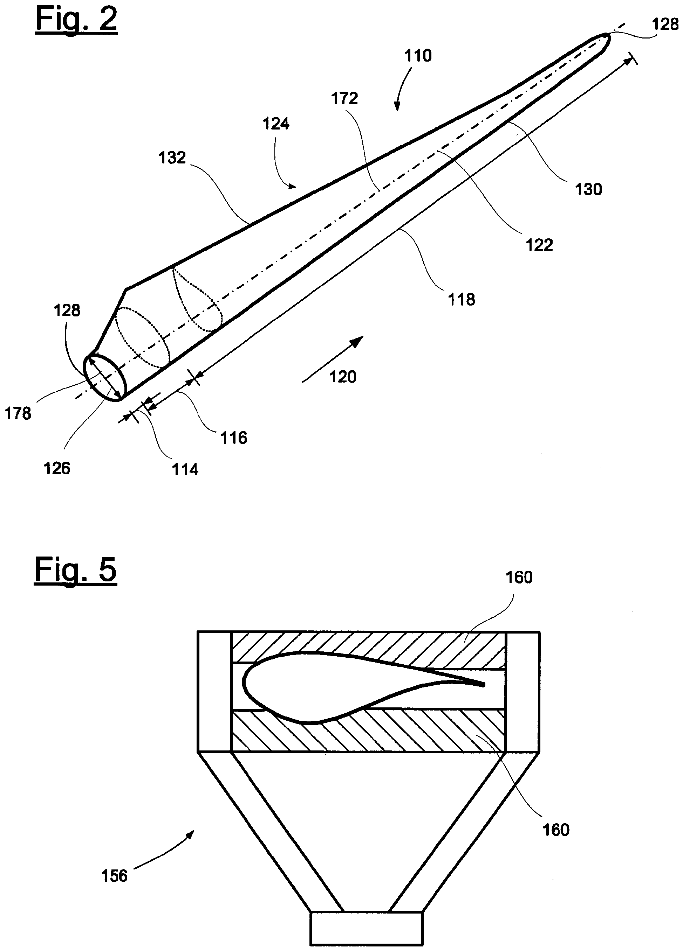

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt beziehungsweise zugeordnet ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat eine Längsachse 120 sowie eine Druckseite 122 und eine gegenüberliegende Saugseite 124. Das Rotorblatt 110 ist im Inneren im Wesentlichen hohl ausgebildet. Das Rotorblatt 110 hat ein blattwurzelseitiges Ende 126 und ein blattspitzenseitiges Ende 128. Das Rotorblatt 110 hat eine Profilnasenkante 130 und eine Profilendkante 132.

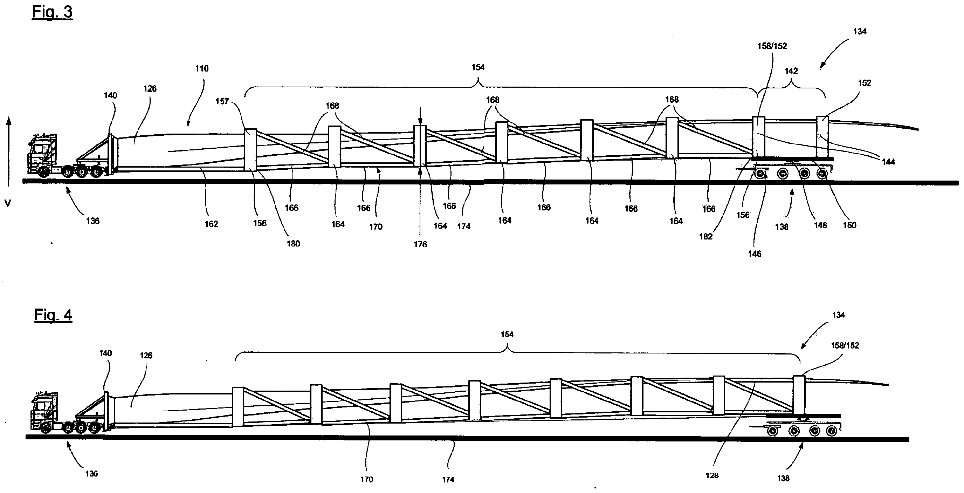

Figur 3 zeigt schematisch ein Transportsystem 134 in einer schematischen Seitenansicht gemäß einem Ausführungsbeispiel der Erfindung. Bei dem Transportfahrzeug 134 handelt es sich um ein Schwerlast-Transportfahrzeug für den Transport eines Windenergieanlagenrotorblatts 110. Das Transportsystem 134 hat eine Zugmaschine 136 und ein Nachläuferfahrzeug 138.

Die Zugmaschine 136 entspricht beispielsweise einer herkömmlichen Lkw-Zugmaschine und weist einen eigenen Antrieb, etwa einen Motor, auf. An der Zugmaschine 136 ist eine vordere Lagervorrichtung 140 zum Festlegen des Rotorblatts 110 angeordnet. Das Rotorblatt 110 ist mit seinem blattwurzelseitigen Ende 126 an der vorderen Lagervorrichtung 140 im bestimmungsgemäßen Zustand fest montiert.

In einem hinteren, blattspitzenseitigen Bereich 142 ist das Rotorblatt 110 an dem Nachläuferfahrzeug 138 abgestützt. Hierzu hat das Nachläuferfahrzeug 138 eine hintere Lagervorrichtung 144. Bei dem Nachläuferfahrzeug 118 handelt es sich um ein Fahrzeug mit mehreren Achsen, welches ohne eigenen Antrieb ausgestattet ist. Dadurch, dass das Rotorblatt 110 fest mechanisch mit dem Nachläuferfahrzeug 138 verbunden ist, wird das Nachläuferfahrzeug durch den Antrieb der Zugmaschine 136 mitgezogen.

Das Nachläuferfahrzeug 138 weist ein Fahrwerk 146 auf, welches ein Fahrgestell mit daran angebrachten Achsen und Rädern umfasst. An dem Fahrwerk 146 ist ein Dreh- und/oder Wipplager 148 (nachfolgend Drehlager 148) fest angeordnet. Das Drehlager 148 ist über einen Gestelltisch 150 fest mit der hinteren Lagervorrichtung 144 verbunden, welche durch zwei hintere Lager- oder Haltegestelle 152 gebildet ist. Die hinteren Haltegestelle 152 stellen zwei Aufnahmepunkte oder Lagerungspunkte für das Rotorblatt 110 dar. Das Rotorblatt 110 ist im bestimmungsgemäß gelagerten Zustand fest mit den Haltegestellen 152 verbunden. Die Haltegestelle 152 können, müssen aber nicht fest direkt miteinander verbunden sein. Im Ausführungsbeispiel sind die Haltegestelle 152 mittelbar über den Gestelltisch 150 mechanisch verbunden.

Das Transportsystem 134 weist eine Versteifungsvorrichtung 154 auf. Die Versteifungsvorrichtung 154 weist eine erste Kopplungsvorrichtung 156 und eine zweite Kopplungsvorrichtung 158 auf. Die erste Kopplungsvorrichtung 156 ist als ein vertikales Haltegestell 157 ausgebildet und ist bezogen auf die Längsachse 120 (siehe Figur 2, nicht in Figur 3 eingezeichnet) in einer dem wurzelseitigen Ende 126 zugewandten Hälfte angeordnet. Vertikal bedeutet, dass eine Haupterstreckungsrichtung des Haltegestells vertikal verläuft. Eine vertikale Richtung V ist in Figur 3 eingezeichnet. Die erste Kopplungsvorrichtung 156 ist fest mit dem Rotorblatt 110 verbunden und bildet eine steife Einheit mit diesem.

Ein exemplarisches Haltegestell 156 ist in Figur 5 gezeigt. Das Haltegestell 156 weist zwei Aufnahmeschalen 160 auf, die zumindest teilweise an eine Formgebung des Rotorblatts 110 angepasst sind und dieses umschließen.

Die zweite Kopplungsvorrichtung 158 ist ebenso als ein vertikales Haltegestell ausgebildet, welches Teil der hinteren Lagervorrichtung 144 ist.

Die erste Kopplungsvorrichtung 156 ist über einen oder mehrere erste Balken beziehungsweise Trägerbalken 162 (allgemein Haltestrukturen) mit der vorderen Lagervorrichtung 140 mechanisch verbunden.

Die Versteifungsvorrichtung 154 weist weiterhin zwischen den beiden Kopplungsvorrichtungen 156, 158 angeordnete, vertikale (Zwischen-)Haltegestelle 164 auf, die jeweils fest mit dem Rotorblatt 110 verbunden sind. Die beiden Kopplungsvorrichtungen 156, 158 sowie die Zwischenhaltegestelle 164 sind fachwerkartig über horizontale zweite Balken 166 (auch Verbindungsbalken) sowie dritte, schräg angeordnete Balken 168 mechanisch verbunden, die ebenfalls Teil der Versteifungsvorrichtung 154 sind. Die Verbindungen sind gelenkig ausgeführt. Die dargestellten zweiten und dritten Balken 166, 168 können sämtlich oder in Teilen jeweils doppelt vorliegen, das heißt auf der gezeigten Vorderseite als auch gespiegelt auf der nicht gezeigten Rückseite. Die diagonalen Balken 168 können auch als zubelastete Seile oder zubelastete Stäbe (Zugeseile oder Zugstäbe) ausgeführt sein. Die Orientierung solcher diagonaler Balken 168 ist beispielweise in umgekehrter Richtung ausgeführt.

Die zweiten und dritten Balken 166, 168 sowie die Zwischenhaltegestelle 164 stellen ein Verbindungsmittel 170 der Versteifungsvorrichtung 154 dar, welches die beiden Kopplungsvorrichtungen 156, 158 mechanisch verbindet. Die zweiten Balken 166 können direkt oder mittelbar, über die Haltegestelle 164, miteinander gekoppelt sein.

Dadurch bildet das Rotorblatt 110 zusammen mit der Versteifungsvorrichtung 154 eine versteifte Einheit wie eingangs erläutert. Dabei ist das Rotorblatt 110 so zwischen die Kopplungsvorrichtung 156, 158 montiert, dass zumindest das Verbindungsmittel 170 auf Zug belastet ist. Insbesondere die zweiten Balken 166 sind auf Zug belastet und nehmen Kräfte auf, die durch eine Durchbiegung des Blattes 110 entstehen und die beiden Kopplungsvorrichtungen 156, 158 auseinanderdrücken würden. Im montierten Zustand hat eine Nulllinie 172 (siehe Figur 2) des Rotorblatts 110 zumindest teilweise zwischen den Kopplungsvorrichtungen 156, 158 eine Krümmung entgegen der Schwerkraftrichtung, das heißt eine Wölbung weg von einem Untergrund 174 (Krümmung in Figur 3 nicht eingezeichnet aus Gründen der Übersichtlichkeit). Dadurch wird das Rotorblatt 110 zwischen den beiden Kopplungsvorrichtungen 156, 158 versteift und es wird eine Durchbiegung des Blattes 110 vermieden oder zumindest auf ein strukturell sinnvolles Maß reduziert.

Gemäß dem anhand von Figur 3 beschriebenen Ausführungsbeispiel ist ersichtlich, dass die Kopplungsvorrichtungen 156, 158 sowie die Zwischenhaltegestelle 164 eine vertikale Höhe 176 haben, die in etwa einem Durchmesser 178 des Rotorblatts 110 am wurzelseitigen Ende 126 entspricht. Die Höhe 176 der Gestelle beziehungsweise Kopplungsvorrichtungen kann unterschiedlich und/oder kleiner sein. Koppelpunkte 180 und 182, an denen das Verbindungsmittel 170, das heißt die zweiten Balken 166, an der ersten beziehungsweise zweiten Kopplungsvorrichtung 156, 158 angreifen, liegen deutlich unter dem Rotorblatt 110, insbesondere unterhalb der Nulllinie 172. Dies begünstigt die versteifende Wirkung und ist insbesondere hinsichtlich der wirkenden Kräfte vorteilhaft.

Figur 4 zeigt eine leicht abgewandelte Form des anhand von Figur 3 beschriebenen Ausführungsbeispiels. Aus Gründen der Übersicht wurde daher davon abgesehen, sämtliche Bezugszeichen der Figur 3 in Figur 4 erneut darzustellen. Im Unterschied zu dem Beispiel gemäß Figur 3 ist die hintere Lagervorrichtung 144 des Nachläuferfahrzeugs 138 nicht als ein Doppelgestell ausgeführt, sondern weist nur ein hinteres Haltegestell 152 auf, welches analog zu oben als zweite Kopplungsvorrichtung 158 fungiert. Die Funktionsweise ist analog zu oben.

In beiden Ausführungsbeispielen gemäß Figuren 3 und 4 greifen die zweiten und dritten Balken 166, 168 an einem hinteren Lagergestell 152 an, um mittelbar fest mit dem Rotorblatt 110 im blattspitzenseitigen Bereich verbunden zu sein. Es sind auch andere Kopplungen denkbar. Beispielsweise könnte das Verbindungsmittel 170 mit oder ohne dritte Balken 168 an dem Gestelltisch 150 angreifen, welcher wiederum steif mit einem hinteren Haltegestell 152 und somit fest mit dem Rotorblatt 110 verbunden ist. Bezüglich der Kopplung mit der ersten Kopplungsvorrichtung 156 sind ebenfalls andere Ausgestaltungen denkbar. Wie eingangs erwähnt könnte die erste Kopplungsvorrichtung 156 nicht als Haltegestell ausgebildet sein, sondern Teil der vorderen Lagervorrichtung 140 sein. Beispielsweise ist die erste Kopplungsvorrichtung 156 in diesem Fall als ein Befestigungselement ausgebildet, der die Kopplung mit dem Verbindungsmittel 170, etwa einem zweiten Balken 166, ermöglicht. Gleiches gilt auch für die zweite Kopplungsvorrichtung 158, die nicht zwingend Teil der hinteren Lagervorrichtung 144 sein muss, sondern wie die erste Kopplungsvorrichtung 156 als ein Haltegestell ausgebildet sein kann, welches zwischen der hinteren Lagervorrichtung 144 und einer Mitte des Blattes 110 (bezüglich der Längsachse 120) angeordnet ist. Allen Ausführungsformen gemein ist, dass das Rotorblatt 110 Teil der Versteifungseinheit ist.

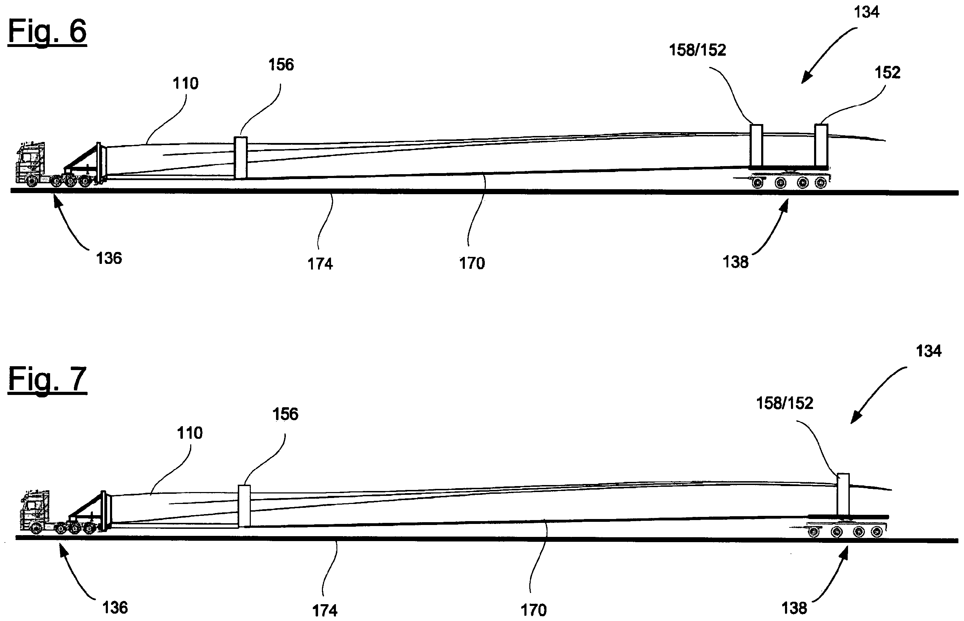

Figur 6 zeigt ein weiteres Ausführungsbeispiel eines Transportsystems 134, welches den Ausführungen gemäß Figuren 3 und 4 sehr ähnlich ist. Bei funktions- beziehungsweise baugleichen Elementen werden dieselben Bezugszeichen verwendet.

Das Transportsystem 134 ist analog zu oben aufgebaut und weist eine erste und eine zweite Kopplungsvorrichtung 156, 158 auf. Im Unterschied dazu sind die beiden Kopplungsvorrichtungen 156, 158 nicht über Balken 166, 168 sowie Zwischenhaltegestelle 164 verbunden, sondern über ein oder mehrere Seile, die das Verbindungsmittel 170 bilden. Beispielsweise handelt es sich um ein oder mehrere Stahlseile.

Das Verbindungsmittel 170 verbindet mechanisch die beiden Kopplungsvorrichtungen 156, 158, so dass bei bestimmungsgemäß gelagertem Rotorblatt 110 wiederum eine Versteifung gebildet ist, bei der das Verbindungsmittel 170 auf Zug gespannt ist und eine schädliche Durchbiegung des Rotorblatts 110 wie oben verhindert.

Figur 7 zeigt eine leicht abgewandelte Form des anhand von Figur 6 beschriebenen Ausführungsbeispiels. Aus Gründen der Übersicht wurde daher davon abgesehen, sämtliche Bezugszeichen der Figur 6 in Figur 7 erneut darzustellen. Im Unterschied zu dem Beispiel gemäß Figur 6 ist die hintere Lagervorrichtung 144 des Nachläuferfahrzeugs 138 nicht als ein Doppelgestell ausgeführt, sondern weist nur ein hinteres Haltegestell 152 auf, welches analog zu oben als zweite Kopplungsvorrichtung 158 fungiert. Die Funktionsweise ist analog zu oben.

Im Übrigen gilt das in Bezug auf die Ausführungen der Figuren 3 und 4 Gesagte hinsichtlich der möglichen Abwandlungen der ersten und zweiten Kopplungsvorrichtungen 156, 158 analog.

Es sei weiterhin darauf hingewiesen, dass die Kopplungsvorrichtungen 156, 158, die Verbindungsmittel 170 sowie die Balken 162, 166 und 168 allesamt oder in Teilen aus metallischen Werkstoffen oder Faserverbundwerkstoffen hergestellt sind. Je leichter die Elemente desto effektiver.

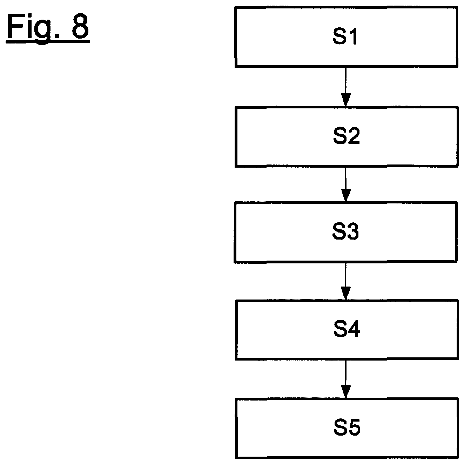

Figur 8 zeigt ein schematisches Ablaufdiagramm eines Verfahrens zum Transport eines Rotorblattes 110.

In einem ersten Schritt S1 wird das blattwurzelseitige Ende 126 des Windenergieanlagenrotorblatts 110 an der vorderen Lagervorrichtung 140 festgelegt.

In einem nächsten Schritt S2 wird der hintere, blattspitzenseitige Bereich 142 des Windenergieanlagenrotorblatts 110 an der hinteren Lagervorrichtung 144 des Nachläuferfahrzeugs 138 festgelegt.

Schritte S1 und S2 können auch vertauscht sein.

In einem nächsten Schritt S3 wird die Versteifungsvorrichtung 154 für das Windenergieanlagenrotorblatt 110 bereitgestellt und montiert. Wie oben erläutert umfasst die Versteifungsvorrichtung die erste Kopplungsvorrichtung 156, die zweite Kopplungsvorrichtung 158 und das Verbindungsmittel 170.

In einem nächsten Schritt S4 wird die erste Kopplungsvorrichtung 156 bezogen auf die Längsachse 120 des Windenergieanlagenrotorblatts 110 in einem vorderen, blattwurzelseitigen Bereich des Windenergieanlagenrotorblatts 110 fest mit dem Windenergieanlagenrotorblatt 110 verbunden.

Die zweite Kopplungsvorrichtung 158, die in den Ausführungsbeispielen der Figuren 3 bis 7 Teil der hinteren Lagervorrichtung 144 ist, ist bereits mit dem Windenergieanlagenrotorblatt 110 fest verbunden. Andernfalls wäre die zweite Kopplungsvorrichtung 158 in einem weiteren Schritt zu befestigen.

In einem nächsten Schritt S5 werden die beiden Kopplungsvorrichtungen 156, 158 mittels des Verbindungsmittels 170 miteinander derart verbunden, dass das Verbindungsmittel 170 auf Zug belastet ist. Dadurch wird eine Versteifungsstruktur durch die Versteifungsvorrichtung 154 zusammen mit dem Windenergieanlagenrotorblatt 110 gebildet, so dass einer Durchbiegung des Windenergieanlagenrotorblatts 110 zwischen den beiden Kopplungsvorrichtungen 156, 158 entgegengewirkt wird.

### Bezugszeichenliste

- 100: Windenergieanlage
- 102: Turm
- 104: Fundament
- 106: Gondel
- 108: Rotor
- 110: Rotorblatt, Windenergieanlagenrotorblatt
- 112: Rotornabe
- 114: Rotorblattwurzelbereich
- 116: Übergangsbereich
- 118: Profilbereich
- 120: Längsachse
- 122: Druckseite
- 124: Saugseite
- 126: blattwurzelseitiges Ende
- 128: blattspitzenseitiges Ende
- 130: Profilnasenkante
- 132: Profilendkante
- 134: Transportsystem
- 136: Zugmaschine
- 138: Nachläuferfahrzeug
- 140: vordere Lagervorrichtung
- 142: hinterer, blattspitzenseitiger Bereich
- 144: hintere Lagervorrichtung
- 146: Fahrwerk
- 148: Drehlager
- 150: Gestelltisch
- 152: hinteres Haltegestell
- 154: Versteifungsvorrichtung
- 156: erste Kopplungsvorrichtung
- 157: Haltegestell
- 158: zweite Kopplungsvorrichtung
- 160: Aufnahmeschale
- 162: erster Balken
- 164: Zwischenhaltegestell
- 166: zweiter Balken
- 168: dritter Balken
- 170: Verbindungsmittel
- 172: Nulllinie
- 174: Untergrund
- 176: vertikale Höhe
- 178: Durchmesser
- 180: erster Koppelpunkt
- 182: zweiter Koppelpunkt
- Sn: Schritte
- V: vertikale Richtung

## Patentansprüche

1. Transportsystem (134) für ein Windenergieanlagenrotorblatt (110), aufweisend
ein Windenergieanlagenrotorblatt (110),
eine vordere Lagervorrichtung (140), an welcher ein blattwurzelseitiges Ende (126) des Windenergieanlagenrotorblatts (110) festgelegt ist, wobei die vordere Lagervorrichtung (140) zum Lagern des Windenergieanlagenrotorblatts (110) an einer Zugmaschine (136) eingerichtet ist,
ein antriebsloses Nachläuferfahrzeug (138) mit einer hinteren Lagervorrichtung (144), an welcher ein hinterer, blattspitzenseitiger Bereich (142) des Windenergieanlagenrotorblatts (110) festgelegt ist, und
eine Versteifungsvorrichtung (154) für das Windenergieanlagenrotorblatt (110), die eine erste Kopplungsvorrichtung (156), eine zweite Kopplungsvorrichtung (158) und ein Verbindungsmittel (170) aufweist, wobei
die erste Kopplungsvorrichtung (156) bezogen auf die Längsachse (120) des Windenergieanlagenrotorblatts (110) in einem vorderen, blattwurzelseitigen Bereich des Windenergieanlagenrotorblatts (110) fest mit dem Windenergieanlagenrotorblatt (110) verbunden ist,
die zweite Kopplungsvorrichtung (158) bezogen auf die Längsachse (120) des Windenergieanlagenrotorblatts (110) in dem hinteren Bereich (142) des Windenergieanlagenrotorblatts (110) fest mit dem Windenergieanlagenrotorblatt (110) verbunden ist,
**dadurch gekennzeichnet, dass**
die beiden Kopplungsvorrichtungen (156, 158) mittels des Verbindungsmittels (170) miteinander derart verspannt sind, dass das Verbindungsmittel (170) auf Zug belastet ist und die beiden Kopplungsvorrichtungen (156, 158) entgegen einer durch das Rotorblatt (110) erzeugten Durchbiegekraft zusammengezogen beziehungsweise zusammengehalten werden, so dass die Versteifungsvorrichtung (154) zusammen mit dem Windenergieanlagenrotorblatt (110) eine selbstragende oder freitragende Versteifungsstruktur bildet und dadurch einer Durchbiegung des Windenergieanlagenrotorblatts (110) zwischen den beiden Kopplungsvorrichtungen (156, 158) entgegengewirkt wird.

2. Transportsystem (134) nach Anspruch 1,
wobei das Windenergieanlagenrotorblatt (110) derart zwischen den beiden Kopplungsvorrichtungen (156, 158) angeordnet ist, dass die Nulllinie (172) des Windenergieanlagenrotorblatts (110) eine Krümmung entgegen der Schwerkraftrichtung aufweist.

3. Transportsystem (134) nach Anspruch 1 oder 2,
wobei die erste Kopplungsvorrichtung (156) Teil der vorderen Lagervorrichtung (140) ist.

4. Transportsystem (134) nach einem der vorhergehenden Ansprüche,
wobei die zweite Kopplungsvorrichtung (158) Teil der hinteren Lagervorrichtung (144) oder an dem Nachläuferfahrzeug (138) ausgebildet ist.

5. Transportsystem (134) nach einem der vorhergehenden Ansprüche,
wobei die erste Kopplungsvorrichtung (156) derart ausgebildet ist, dass ein Koppelpunkt (180), in welchem das Verbindungsmittel (170) mit der ersten Kopplungsvorrichtung (156) verbunden ist, bezüglich einer vertikalen Richtung (V) von einer Nulllinie (172) des Windenergieanlagenrotorblatts (110) beabstandet ist.

6. Transportsystem (134) nach einem der vorhergehenden Ansprüche,
wobei die zweite Kopplungsvorrichtung (158) derart ausgebildet ist, dass ein Koppelpunkt (182), in welchem das Verbindungsmittel (170) mit der zweiten Kopplungsvorrichtung (158) verbunden ist, bezüglich einer vertikalen Richtung (V) von einer Nulllinie (172) des Windenergieanlagenrotorblatts (110) beabstandet ist.

7. Transportsystem (134) nach einem der vorhergehenden Ansprüche,
wobei die erste Kopplungsvorrichtung (156) als ein Haltegestell (157) ausgebildet ist, welches bezogen auf die Längsachse (120) des Windenergieanlagenrotorblatts (110) zwischen der vorderen Lagervorrichtung (140) und einer Mitte des Windenergieanlagenrotorblatts (110) angeordnet ist.

8. Transportsystem (134) nach einem der vorhergehenden Ansprüche,
wobei die zweite Kopplungsvorrichtung (158) als ein Haltegestell (152) ausgebildet ist, welches bezogen auf die Längsachse (120) des Windenergieanlagenrotorblatts (110) zwischen der hinteren Lagervorrichtung (144) und einer Mitte des Windenergieanlagenrotorblatts (110) angeordnet ist.

9. Transportsystem (134) nach Anspruch 7 oder 8,
wobei die erste und/oder zweite Kopplungsvorrichtung (156, 158) über einen oder mehrere Balken (162) mit der vorderen beziehungsweise hinteren Lagervorrichtung (144) fest verbunden sind.

10. Transportsystem (134) nach einem der vorhergehenden Ansprüche,
wobei das Verbindungsmittel (170) durch mehrere, untereinander gelenkig verbundene Verbindungsbalken (166) gebildet ist.

11. Transportsystem (134) nach Anspruch 10,
wobei zwischen der ersten Kopplungsvorrichtung (156) und der zweiten Kopplungsvorrichtung (158) mehrere Haltegestelle (164) angeordnet sind, die jeweils fest mit dem Windenergieanlagenrotorblatt (110) verbunden sind, wobei die Haltegestelle (164) mit den Verbindungsbalken (166) und weiteren Balken (168) oder Seilen oder Stäben, insbesondere gelenkig, verbunden sind.

12. Transportsystem (134) nach einem der Ansprüche 7 bis 11, wobei eine vertikale Höhe (176) zumindest eines oder mehrerer Haltegestelle (157, 164) kleiner oder gleich ist als ein Durchmesser (178) des Rotorblatts (110) am blattwurzelseitigen Ende (126).

13. Transportsystem (134) nach einem der Ansprüche 7 bis 12, wobei jedes Haltegestell (157, 164) ein oder mehrere Aufnahmeschalen (160) zum Aufnehmen des Windenergieanlagenrotorblatts (110) aufweist, welche an eine äußere Kontur des Windenergieanlagenrotorblatts (110) angepasst sind.

14. Transportsystem (134) nach einem der Ansprüche 1 bis 9, wobei das Verbindungsmittel (170) durch ein oder mehrere Seile, insbesondere Stahlseile, gebildet ist.

15. Transportsystem (134) für ein Windenergieanlagenrotorblatt (110), aufweisend
eine vordere Lagervorrichtung (140), an welcher ein blattwurzelseitiges Ende (126) des Windenergieanlagenrotorblatts (110) festlegbar ist, wobei die vordere Lagervorrichtung (140) zum Lagern des Windenergieanlagenrotorblatts (110) an einer Zugmaschine (136) eingerichtet ist,
ein antriebsloses Nachläuferfahrzeug (138) mit einer hinteren Lagervorrichtung (144), an welcher ein hinterer, blattspitzenseitiger Bereich (142) des Windenergieanlagenrotorblatts (110) festlegbar ist, und
eine Versteifungsvorrichtung (154) für das Windenergieanlagenrotorblatt (110), die eine erste Kopplungsvorrichtung (156), eine zweite Kopplungsvorrichtung (158) und ein Verbindungsmittel (170) aufweist, wobei
die erste Kopplungsvorrichtung (156) eingerichtet ist, bezogen auf eine Längsachse (120) des Windenergieanlagenrotorblatts (110) in einem vorderen, blattwurzelseitigen Bereich des Windenergieanlagenrotorblatts (110) fest mit dem Windenergieanlagenrotorblatt (110) verbunden zu werden,
die zweite Kopplungsvorrichtung (158) eingerichtet ist, bezogen auf die Längsachse (120) des Windenergieanlagenrotorblatts (110) in dem hinteren Bereich (142) des Windenergieanlagenrotorblatts (110) fest mit dem Windenergieanlagenrotorblatt (110) verbunden zu werden, **dadurch gekennzeichnet,**
**dass** die beiden Kopplungsvorrichtungen (156, 158) mittels des Verbindungsmittels (170) miteinander derart verspannbar sind, dass - bei bestimmungsgemäßer Festlegung der Kopplungsvorrichtungen (156, 158) an dem Windenergieanlagenrotorblatt (110) - das Verbindungsmittel (170) auf Zug belastet ist und die beiden Kopplungsvorrichtungen (156, 158) entgegen einer durch das Rotorblatt (110) erzeugten Durchbiegekraft zusammengezogen beziehungsweise zusammengehalten werden, und die Versteifungsvorrichtung (154) zusammen mit dem Windenergieanlagenrotorblatt (110) eine selbstragende oder freitragende Versteifungsstruktur bildet und dadurch einer Durchbiegung des Windenergieanlagenrotorblatts (110) zwischen den beiden Kopplungsvorrichtungen (156, 158) entgegengewirkt wird.

## Claims

1. Transport system (134) for a wind turbine rotor blade (110), comprising
a wind turbine rotor blade (110),
a front bearing device (140) to which a blade root side end (126) of the wind turbine rotor blade (110) is fixed, the front bearing device (140) being adapted to support the wind turbine rotor blade (110) on a tractor unit (136),
a powerless trailing vehicle (138) having a rear bearing device (144) to which a rear, blade tip side portion (142) of the wind turbine rotor blade (110) is secured, and
a stiffening device (154) for the wind turbine rotor blade (110) comprising a first coupling device (156), a second coupling device (158) and a connecting means (170), wherein
the first coupling device (156) is fixedly connected to the wind turbine rotor blade (110) relative to the longitudinal axis (120) of the wind turbine rotor blade (110) in a forward, blade root side region of the wind turbine rotor blade (110),
the second coupling device (158) is fixedly connected to the wind turbine rotor blade (110) in the rear portion (142) of the wind turbine rotor blade (110) with respect to the longitudinal axis (120) of the wind turbine rotor blade (110),
**characterized in that**
the two coupling devices (156, 158) are braced together by means of the connecting means (170) such that the connecting means (170) is loaded in tension and the two coupling devices (156, 158) are pulled together or held together against a deflection force generated by the rotor blade (110), so that the stiffening device (154) together with the wind turbine rotor blade (110) forms a self-supporting or cantilevered stiffening structure, thereby counteracting deflection of the wind turbine rotor blade (110) between the two coupling devices (156, 158).

2. Transport system (134) according to claim 1,
wherein the wind turbine rotor blade (110) is arranged between the two coupling devices (156, 158) such that the zero line (172) of the wind turbine rotor blade (110) has a curvature opposite to the direction of gravity.

3. Transport system (134) according to claim 1 or 2,
wherein the first coupling device (156) is part of the front bearing device (140).

4. Transport system (134) according to any one of the preceding claims,
wherein the second coupling device (158) is part of the rear bearing device (144) or is formed on the trailing vehicle (138) .

5. Transport system (134) according to any one of the preceding claims,
wherein the first coupling device (156) is configured such that a coupling point (180), in which the connecting means (170) is connected to the first coupling device (156), is spaced from a zero line (172) of the wind turbine rotor blade (110) with respect to a vertical direction (V).

6. Transport system (134) according to any one of the preceding claims,
wherein the second coupling device (158) is configured such that a coupling point (182), in which the connecting means (170) is connected to the second coupling device (158), is spaced from a zero line (172) of the wind turbine rotor blade (110) with respect to a vertical direction (V).

7. Transport system (134) according to any one of the preceding claims,
wherein the first coupling device (156) is formed as a support frame (157) arranged between the front bearing device (140) and a center of the wind turbine rotor blade (110) with respect to the longitudinal axis (120) of the wind turbine rotor blade (110).

8. Transport system (134) according to any one of the preceding claims,
wherein the second coupling device (158) is formed as a support frame (152) arranged between the rear bearing device (144) and a center of the wind turbine rotor blade (110) with respect to the longitudinal axis (120) of the wind turbine rotor blade (110).

9. Transport system (134) according to claim 7 or 8, wherein the first and/or second coupling devices (156, 158) are fixedly connected to the front and rear bearing devices (144), respectively, via one or more beams (162).

10. Transport system (134) according to any one of the preceding claims,
wherein the connecting means (170) is formed by a plurality of connecting beams (166) hingedly connected to each other.

11. Transport system (134) according to claim 10,
wherein between the first coupling device (156) and the second coupling device (158) a plurality of holding frames (164) is arranged, each of which is fixedly connected to the wind turbine rotor blade (110), wherein the holding frames (164) are connected to the connecting beams (166) and further beams (168) or cables or rods, in particular in an articulated manner.

12. Transport system (134) according to any one of claims 7 to 11,
wherein a vertical height (176) of at least one or more support frames (157, 164) is less than or equal to a diameter (178) of the rotor blade (110) at the blade root side end (126) .

13. Transport system (134) according to any one of claims 7 to 12,
wherein each support frame (157, 164) comprises one or more receiving trays (160) for receiving the wind turbine rotor blade (110), the receiving trays (160) being adapted to an outer contour of the wind turbine rotor blade (110).

14. Transport system (134) according to any one of claims 1 to 9,
wherein the connecting means (170) is formed by one or more cables, in particular steel cables.

15. Transport system (134) for a wind turbine rotor blade (110), comprising
a front bearing device (140) to which a blade root side end (126) of the wind turbine rotor blade (110) is fixed, the front bearing device (140) being adapted to support the wind turbine rotor blade (110) on a tractor unit (136),
a powerless trailing vehicle (138) having a rear bearing device (144) to which a rear, blade tip side portion (142) of the wind turbine rotor blade (110) is secured, and
a stiffening device (154) for the wind turbine rotor blade (110) comprising a first coupling device (156), a second coupling device (158) and a connecting means (170), wherein
the first coupling device (156) is fixedly connected to the wind turbine rotor blade (110) relative to the longitudinal axis (120) of the wind turbine rotor blade (110) in a forward, blade root side region of the wind turbine rotor blade (110),
the second coupling device (158) is fixedly connected to the wind turbine rotor blade (110) in the rear portion (142) of the wind turbine rotor blade (110) with respect to the longitudinal axis (120) of the wind turbine rotor blade (110),
**characterized in that**
the two coupling devices (156, 158) are braceable with each other by means of the connecting means (170) in such a way that - when the coupling devices (156, 158) are fixed to the wind turbine rotor blade (110) as intended - the connecting means (170) is loaded in tension and the two coupling devices (156, 158) are pulled or held together against a deflection force generated by the rotor blade (110), and the stiffening device (154) together with the wind turbine rotor blade (110) forms a self-supporting or cantilevered stiffening structure and thereby a deflection of the wind turbine rotor blade (110) between the two coupling devices (156, 158) is counteracted.

## Revendications

1. Système de transport (134) pour une pale de rotor d'éolienne (110), présentant
une pale de rotor d'éolienne (110),
un dispositif de logement avant (140) au niveau duquel une extrémité côté racine de pale (126) de la pale de rotor d'éolienne (110) est fixée, sachant que le dispositif de logement avant (140) est configuré pour loger la pale de rotor d'éolienne (110) au niveau d'un tracteur (136),
un véhicule remorque sans entraînement (138) présentant un dispositif de logement arrière (144) au niveau duquel une zone arrière côté pointe de pale (142) de la pale de rotor d'éolienne (110) est fixée, et
un dispositif de raidissement (154) pour la pale de rotor d'éolienne (110), qui présente un premier dispositif de couplage (156), un deuxième dispositif de couplage (158) et un moyen de liaison (170), sachant que
le premier dispositif de couplage (156) est fermement relié à la pale de rotor d'éolienne (110) dans une zone avant côté racine de pale de la pale de rotor d'éolienne (110) par rapport à l'axe longitudinal (120) de la pale de rotor d'éolienne (110),
le deuxième dispositif de couplage (158) est fermement relié à la pale de rotor d'éolienne (110) dans la zone arrière (142) de la pale de rotor d'éolienne (110) par rapport à l'axe longitudinal (120) de la pale de rotor d'éolienne (110),
**caractérisés en ce que**
les deux dispositifs de couplage (156, 158) sont serrés l'un avec l'autre moyennant le moyen de liaison (170) de telle manière que le moyen de liaison (170) soit contraint en traction et les deux dispositifs de couplage (156, 158) soient resserrés ou maintenus ensemble inversement à une force de fléchissement générée par la pale de rotor (110) de telle sorte que le dispositif de raidissement (154) forme conjointement avec la pale de rotor d'éolienne (110) une structure de raidissement autoportante ou en porte-à-faux de manière à s'opposer ainsi à un fléchissement de la pale de rotor d'éolienne (110) entre les deux dispositifs de couplage (156, 158).

2. Système de transport (134) selon la revendication 1,
sachant que la pale de rotor d'éolienne (110) est disposée de telle manière entre les deux dispositifs de couplage (156, 158) que la ligne zéro (172) de la pale de rotor d'éolienne (110) présente une courbure inversement au sens de la gravité.

3. Système de transport (134) selon la revendication 1 ou 2,
sachant que le premier dispositif de couplage (156) fait partie du dispositif de logement avant (140).

4. Système de transport (134) selon l'une des revendications précédentes,
sachant que le deuxième dispositif de couplage (158) fait partie du dispositif de logement arrière (144) ou est constitué au niveau du véhicule remorque (138).

5. Système de transport (134) selon l'une des revendications précédentes,
sachant que le premier dispositif de couplage (156) est constitué de telle manière qu'un point de couplage (180) au niveau duquel le moyen de liaison (170) est relié au premier dispositif de couplage (156) soit espacé d'une ligne zéro (172) de la pale de rotor d'éolienne (110) par rapport à une direction verticale (V).

6. Système de transport (134) selon l'une des revendications précédentes,
sachant que le deuxième dispositif de couplage (158) est constitué de telle manière qu'un point de couplage (182) au niveau duquel le moyen de liaison (170) est relié au deuxième dispositif de couplage (158) soit espacé d'une ligne zéro (172) de la pale de rotor d'éolienne (110) par rapport à une direction verticale (V).

7. Système de transport (134) selon l'une des revendications précédentes,
sachant que le premier dispositif de couplage (156) est constitué comme châssis de maintien (157), lequel est disposé entre le dispositif de logement avant (140) et un milieu de la pale de rotor d'éolienne (110) par rapport à l'axe longitudinal (120) de la pale de rotor d'éolienne (110).

8. Système de transport (134) selon l'une des revendications précédentes,
sachant que le deuxième dispositif de couplage (158) est constitué comme châssis de maintien (152), lequel est disposé entre le dispositif de logement arrière (144) et un milieu de la pale de rotor d'éolienne (110) par rapport à l'axe longitudinal (120) de la pale de rotor d'éolienne (110).

9. Système de transport (134) selon la revendication 7 ou 8,
sachant que le premier et/ou le deuxième dispositif de couplage (156, 158) sont fermement reliés au dispositif de logement avant ou arrière (144), respectivement, via une ou plusieurs poutres (162).

10. Système de transport (134) selon l'une des revendications précédentes,
sachant que le moyen de liaison (170) est formé par plusieurs poutres de liaison (166) reliées entre elles de manière articulée.

11. Système de transport (134) selon la revendication 10,
sachant que plusieurs châssis de maintien (164) qui sont respectivement fermement reliés à la pale de rotor d'éolienne (110) sont disposés entre le premier dispositif de couplage (156) et le deuxième dispositif de couplage (158), sachant que les châssis de maintien (164) sont reliés aux poutres de liaison (166) et à des poutres (168) supplémentaires ou filins ou barres, en particulier de manière articulée.

12. Système de transport (134) selon l'une des revendications 7 à 11,
sachant qu'une hauteur verticale (176) d'au moins un ou plusieurs châssis de maintien (157, 164) est inférieure ou égale à un diamètre (178) de la pale de rotor (110) à l'extrémité côté racine de pale (126).

13. Système de transport (134) selon l'une des revendications 7 à 12,
sachant que chaque châssis de maintien (157, 164) présente une ou plusieurs cuvettes de réception (160) destinées à recevoir la pale de rotor d'éolienne (110), lesquelles sont adaptées à un contour extérieur de la pale de rotor d'éolienne (110).

14. Système de transport (134) selon l'une des revendications 1 à 9,
sachant que le moyen de liaison (170) est formé par un ou plusieurs filins, en particulier filins d'acier.

15. Système de transport (134) pour une pale de rotor d'éolienne (110), présentant
un dispositif de logement avant (140) au niveau duquel une extrémité côté racine de pale (126) de la pale de rotor d'éolienne (110) peut être fixée, sachant que le dispositif de logement avant (140) est configuré pour loger la pale de rotor d'éolienne (110) au niveau d'un tracteur (136),
un véhicule remorque sans entraînement (138) présentant un dispositif de logement arrière (144) au niveau duquel une zone arrière côté pointe de pale (142) de la pale de rotor d'éolienne (110) peut être fixée, et
un dispositif de raidissement (154) pour la pale de rotor d'éolienne (110), qui présente un premier dispositif de couplage (156), un deuxième dispositif de couplage (158) et un moyen de liaison (170), sachant que
le premier dispositif de couplage (156) est configuré pour être fermement relié à la pale de rotor d'éolienne (110) dans une zone avant côté racine de pale de la pale de rotor d'éolienne (110) par rapport à un axe longitudinal (120) de la pale de rotor d'éolienne (110),
le deuxième dispositif de couplage (158) est configuré pour être fermement relié à la pale de rotor d'éolienne (110) dans la zone arrière (142) de la pale de rotor d'éolienne (110) par rapport à l'axe longitudinal (120) de la pale de rotor d'éolienne (110),
**caractérisés en ce que**
les deux dispositifs de couplage (156, 158) peuvent être serrés l'un avec l'autre moyennant le moyen de liaison (170) de telle manière que - en cas de fixation conforme à l'usage prévu des dispositifs de couplage (156, 158) au niveau de la pale de rotor d'éolienne (110) - le moyen de liaison (170) soit contraint en traction et les deux dispositifs de couplage (156, 158) soient resserrés ou maintenus ensemble inversement à une force de fléchissement générée par la pale de rotor (110), et le dispositif de raidissement (154) forme conjointement avec la pale de rotor d'éolienne (110) une structure de raidissement autoportante ou en porte-à-faux de manière à s'opposer ainsi à un fléchissement de la pale de rotor d'éolienne (110) entre les deux dispositifs de couplage (156, 158).
